# EUROPEAN PATENT APPLICATION

(11) **EP 4 664 546 A1**
(43) Date of publication of application: **17.12.2025**
(21) Application number: 24774757.9
(22) Date of filing: 12.03.2024
(51) Int. Cl.: H01M 4/133, H01G 11/56, H01M 4/587

(54) **NEGATIVE ELECTRODE FOR NONAQUEOUS ELECTROLYTE POWER STORAGE ELEMENT, AND NONAQUEOUS ELECTROLYTE POWER STORAGE ELEMENT**

(30) Priority: 20.03.2023 JP 2023044287
(71) Applicant: GS Yuasa International Ltd., Kisshoin, Minami-ku, Kyoto-shi, Kyoto 601-8520 (JP)
(72) Inventor: TAKANO, Masashi, Kyoto-shi, Kyoto 601-8520 (JP); FURUYA, Yasuyuki, Kyoto-shi, Kyoto 601-8520 (JP)
(74) Representative: Isarpatent
(86) International application number: PCT/JP2024/009452
(87) International publication number: WO 2024/195618

(57) **Abstract**

A negative electrode for a nonaqueous electrolyte energy storage device according to one aspect of the present invention includes a negative active material layer including negative active material particles, in which the negative active material particles include natural graphite particles, an internal void ratio of the negative active material particles is 2% or less, a pore volume of pores having a pore size of 7.8 nm or less in the negative active material particles is 0.0030 cm³/g or less, and a porosity of the negative active material layer is 35% or more and 60% or less.

## Description

### TECHNICAL FIELD

The present invention relates to a negative electrode for a nonaqueous electrolyte energy storage device and a nonaqueous electrolyte energy storage device.

### BACKGROUND ART

Nonaqueous electrolyte secondary batteries typified by lithium ion secondary batteries are often used for electronic devices such as personal computers and communication terminals, automobiles, and the like, because the batteries are high in energy density. The nonaqueous electrolyte secondary batteries generally include a pair of electrodes electrically separated from each other by a separator, and a nonaqueous electrolyte interposed between the electrodes, and are configured to allow charge-transporting ions to be transferred between the two electrodes for charge-discharge. In addition, capacitors such as lithium ion capacitors and electric double-layer capacitors are also widely in use as nonaqueous electrolyte energy storage devices other than the nonaqueous electrolyte secondary batteries.

The nonaqueous electrolyte energy storage device generally includes an electrode assembly in which a positive electrode including a positive active material and a negative electrode including a negative active material are stacked with a separator interposed therebetween. Such an electrode assembly is housed together with a nonaqueous electrolyte in a case to construct a nonaqueous electrolyte energy storage device. As a negative active material, a carbon material such as natural graphite is widely used (see Patent Documents 1 and 2).

### PRIOR ART DOCUMENTS

### PATENT DOCUMENTS

Patent Document 1: JP-A-2005-222933
Patent Document 2: JP-A-2017-069039

### SUMMARY OF THE INVENTION

### PROBLEMS TO BE SOLVED BY THE INVENTION

The nonaqueous electrolyte energy storage device is required to have a large input, a high energy density, and the like. Here, as a means for increasing the energy density of the nonaqueous electrolyte energy storage device, it is conceivable to increase the density of an active material layer of the electrode, specifically, to decrease the porosity of a porous active material layer. However, in general, the input tends to decrease when the porosity of a negative active material layer is too low, since the volume of voids between the negative active material particles decreases, whereby the amount of the nonaqueous electrolyte retained in the voids is reduced. In particular, the input is likely to significantly decrease when natural graphite is used as the negative active material, since natural graphite usually has a larger volume of voids inside the particles than artificial graphite, and thus has a smaller volume of voids between the negative active material particles. The input is energy (W) that can be taken in per unit time during charge. That is, a large input indicates that a large amount of power (W) can be taken in during charge. A large input may be interpreted as having excellent input performance.

An object of the present invention is to provide a negative electrode for a nonaqueous electrolyte energy storage device capable of increasing an input of the nonaqueous electrolyte energy storage device over a wide range of porosity of a negative active material layer, and a nonaqueous electrolyte energy storage device including the negative electrode for a nonaqueous electrolyte energy storage device.

### MEANS FOR SOLVING THE PROBLEMS

A negative electrode for a nonaqueous electrolyte energy storage device according to one aspect of the present invention includes a negative active material layer including negative active material particles, in which the negative active material particles include natural graphite particles, an internal void ratio of the negative active material particles is 2% or less, a pore volume of pores having a pore size of 7.8 nm or less in the negative active material particles is 0.0030 cm³/g or less, and a porosity of the negative active material layer is 35% or more and 60% or less.

A nonaqueous electrolyte energy storage device according to another aspect of the present invention includes the negative electrode for a nonaqueous electrolyte energy storage device according to one aspect of the present invention.

### ADVANTAGES OF THE INVENTION

According to any one aspect of the present invention, it is possible to provide a negative electrode for a nonaqueous electrolyte energy storage device capable of increasing an input of the nonaqueous electrolyte energy storage device over a wide range of porosity of a negative active material layer, and a nonaqueous electrolyte energy storage device including the negative electrode for a nonaqueous electrolyte energy storage device.

### BRIEF DESCRIPTION OF THE DRAWINGS

Fig. 1 is a see-through perspective view illustrating an embodiment of a nonaqueous electrolyte energy storage device.
Fig. 2 is a schematic view illustrating an embodiment of an energy storage apparatus configured by assembling a plurality of nonaqueous electrolyte energy storage devices.

### MODE FOR CARRYING OUT THE INVENTION

First, the outline of a negative electrode for a nonaqueous electrolyte energy storage device and a nonaqueous electrolyte energy storage device disclosed in the present specification will be described.

[1] A negative electrode for a nonaqueous electrolyte energy storage device according to one aspect of the present invention includes a negative active material layer including negative active material particles, in which the negative active material particles include natural graphite particles, an internal void ratio of the negative active material particles is 2% or less, a pore volume of pores having a pore size of 7.8 nm or less in the negative active material particles is 0.0030 cm³/g or less, and a porosity of the negative active material layer is 35% or more and 60% or less.

The negative electrode for a nonaqueous electrolyte energy storage device according to [1] can increase the input of the nonaqueous electrolyte energy storage device over a wide range of porosity of the negative active material layer. That is, the negative electrode for a nonaqueous electrolyte energy storage device according to [1] can increase the input of the nonaqueous electrolyte energy storage device even when the porosity of the negative active material layer is relatively low. The reasons therefor are not clear, but the following reasons are presumed. The porosity of the negative active material layer using the negative active material particles includes two elements: voids between the negative active material particles and voids inside the negative active material particles. The voids contributing to the input performance are mainly the voids between the negative active material particles. When negative active material layers having the same porosity are formed, the volume of voids between the negative active material particles is larger, and a larger amount of nonaqueous electrolyte can be retained in the negative active material layer using the negative active material particles having a low internal void ratio, compared to the negative active material layer using the negative active material particles having a high internal void ratio. Therefore, the use of the negative active material particles having a low internal void ratio allows the depletion of the nonaqueous electrolyte with which the negative active material layer is impregnated to be less likely to occur. In addition, to elaborate on the description that the volume of pores having a pore size of 7.8 nm or less in the negative active material particles is 0.0030 cm³/g or less, the pores opening to the surfaces of the negative active material particles are blocked by a coating treatment or the like, thus becoming smaller. When such negative active material particles are used, the volume of voids between the negative active material particles is further increased, and thus the depletion of the nonaqueous electrolyte is even harder to occur. Furthermore, natural graphite tends to have higher crystallinity and larger input than artificial graphite. For these reasons, the negative electrode for a nonaqueous electrolyte energy storage device according to [1] is presumed to be capable of increasing the input of the nonaqueous electrolyte energy storage device over a wide range of porosity of the negative active material layer.

"Graphite" refers to a carbon material in which the average lattice spacing (d₀₀₂) of the (002) plane determined by an X-ray diffraction method is 0.33 nm or more and less than 0.34 nm before charge-discharge or in a discharged state. Here, the "discharged state" of the carbon material refers to a state where the carbon material serving as the negative active material is discharged so that charge-transporting ions that can be occluded and released upon charge-discharge are sufficiently released from the carbon material. For example, the "discharged state" refers to a state where the open circuit voltage is 0.6 V or higher in a half battery that includes, as a working electrode, a negative electrode including a carbon material serving as a negative active material, and includes metal Li as a counter electrode.

When the carbon material is prepared from the assembled nonaqueous electrolyte energy storage device, the carbon material can be brought into the discharged state specifically by the following method. First, the nonaqueous electrolyte energy storage device is subjected to constant current discharge at a current of 0.1 C until the voltage reaches the end-of-discharge voltage under normal use. Then, the nonaqueous electrolyte energy storage device is disassembled, and the negative electrode is taken out. A half battery including the negative electrode taken out as a working electrode and metal Li as a counter electrode is assembled. When the open circuit voltage in this half battery is less than 0.6 V, the half battery is discharged at a current of 0.1 C so that the open circuit voltage is 0.6 V or more. The discharge in the half battery refers to an oxidation reaction in which charge-transporting ions are released from a carbon material (graphite) which is a negative active material. The half battery is disassembled, and the negative electrode is taken out, sufficiently washed with dimethyl carbonate, and then dried under reduced pressure at room temperature. The operations from the disassembly of the nonaqueous electrolyte energy storage device to the preparation of the carbon material to be measured are performed in a dry air atmosphere at a dew point of -40°C or lower. Here, the term "normal use" means use of the nonaqueous electrolyte energy storage device under the charge-discharge conditions recommended or specified for the nonaqueous electrolyte energy storage device.

"Natural graphite" refers to graphite obtained from natural resources. Note that natural graphite particles of which the surfaces are coated with a material other than natural graphite are also regarded as natural graphite particles. The natural graphite has four peaks appearing at diffraction angles 2θ in the range from 40° to 50° in an X-ray diffraction pattern obtained with the use of CuKα, measured before charge-discharge or in a discharged state. These four peaks are considered to be two peaks derived from a hexagonal crystal structure and two peaks derived from a rhombohedral crystal structure. In the case of artificial graphite, it is generally known that only two peaks derived from a hexagonal crystal structure appear. In the X-ray diffraction pattern, the ratio ((012)/(100)) of the peak intensity derived from the (012) plane to the peak intensity derived from the (100) plane is preferably 0.3 or more, more preferably 0.4 or more. The peak intensity ratio ((012)/(100)) is preferably 0.6 or less. In this regard, the (100) plane is derived from the hexagonal crystal structure, and the (012) plane is derived from the rhombohedral crystal structure.

The "internal void ratio" of the negative active material particles refers to the ratio of the area of the void in a particle to the area of the whole particle in a cross section of the particle observed in a SEM image acquired using a scanning electron microscope (SEM). The "internal void ratio (the ratio of the area of the void in a particle to the area of the whole particle)" in the negative active material particles can be determined by the following procedure.

### (1) Preparation of sample for measurement

The negative electrode to be measured is fixed with a thermosetting resin. The cross section of the negative electrode fixed with the resin is exposed by an ion milling method to fabricate a sample for measurement. When the negative electrode before assembling the nonaqueous electrolyte energy storage device can be prepared, the negative electrode is used as it is for measurement. When the negative electrode to be measured is prepared from the assembled nonaqueous electrolyte energy storage device, a negative electrode obtained by performing the procedure from the disassembly of the nonaqueous electrolyte energy storage device to the drying of the negative electrode under reduced pressure is used, in accordance with the procedure of preparing the carbon material to be subjected to the X-ray diffraction method from the assembled nonaqueous electrolyte energy storage device.

### (2) Acquisition of SEM image

For acquiring a SEM image, JSM-7001F (manufactured by JEOL Ltd.) is used as a scanning electron microscope. For the SEM image, a secondary electron image is observed. The acceleration voltage is 15 kV. The observation magnification is set so that the number of negative active material particles appearing in one field of view is three or more and fifteen or less. The obtained SEM image is stored as an image file. In addition, various conditions such as a spot diameter, a working distance, an irradiation current, luminance, and focus are appropriately set so as to make the contours of the negative active material particles clear.

### (3) Cutting of contours of negative active material particles

The contours of the negative active material particles are cut out from the acquired SEM image by using an image cutting function of image editing software Adobe Photoshop Elements 11. The contours are cut out by selecting the outside of the contours of the negative active material particles using a quick selection tool and performing editing so that the part excluding the negative active material particles is a black background. At this time, when the number of the negative active material particles from which the contours have been able to be cut out is less than three, the SEM image is acquired again, and the cutting out is performed until the number of the negative active material particles from which the contours were able to be cut out becomes three or more.

### (4) Binarization processing

The image of the first negative active material particle among the negative active material particles that have been cut out is subjected to binarization processing by using image analysis software PopImaging 6.00 and setting the threshold value to a concentration 20% lower than the concentration at which the intensity becomes maximum. By the binarization processing, the area on the higher-concentration side is calculated as an "area S1 of void in the particle".

Next, the image of the same first negative active material particle is subjected to the binarization processing using the concentration 10% as the threshold value. The outer edge of the negative active material particle is determined by the binarization processing, and the area inside the outer edge is calculated to obtain an "area S0 of the whole particle".

A "ratio R1 of the area of the void in the particle to the area of the whole particle" for the first negative active material particle is calculated by calculating the ratio of S1 to S0 (S1/S0) using S1 and S0 calculated above.

Each of the images of the second and subsequent negative active material particles among the negative active material particles that have been cut out is also subjected to the binarization processing described above, and the areas S1 and S0 are calculated. Based on the calculated areas S1 and S0, the ratios R2, R3, and so on of the areas of the voids in the negative active material particles are calculated.

### (5) Determination of internal void ratio

The average value of all ratios R1, R2, R3, and so on of the areas of the voids, which are calculated by the binarization processing, is calculated to determine "internal void ratio (the ratio of the area of the void in a particle to the area of the whole particle)".

It is to be noted that, instead of the scanning electron microscope used in "Acquisition of SEM image", the image editing software used in "Cutting of contours of negative active material particles", and the image analysis software used in "Binarization processing", an apparatus, software, and the like capable of the corresponding measurement, image editing, and image analysis may be used.

The "pore volume of pores having a pore size of 7.8 nm or less" in the negative active material particles is measured by performing a gas adsorption method on the negative active material particles before charge-discharge or in a discharged state based on the following conditions using a pore distribution measuring apparatus ("TriStar II 2030" manufactured by Micromeritics Instrument Corporation). Nitrogen is used as the measurement gas. The range of the pore size to be measured is 0.1 nm to 300 nm. The number of measurement points within the range of the pore size to be measured is thirty points. The pore size (pore diameter) and the pore volume are plotted respectively on the horizontal axis and the vertical axis to obtain a cumulative pore volume curve. The "pore volume of pores having a pore size of 7.8 nm or less" is obtained from the cumulative pore volume curve. It has been confirmed that the "pore volume of pores having a pore size of 7.8 nm or less" in the negative active material particles obtained based on the above measurement substantially coincides with the "pore volume of pores having a pore size of 7.8 nm or less" in the negative active material layer. The "pore volume of pores having a pore size of 7.8 nm or less" in the negative active material layer is measured under the same conditions as those for the measurement of the "pore volume of pores having a pore size of 7.8 nm or less" in the negative active material particles described above. When the negative active material layer contains optional components such as a binder, a thickener, and a conductive agent, the negative active material layer is heated to a decomposition temperature of the binder and the thickener or higher in an air atmosphere to thermally decompose and remove at least the binder and the thickener among the optional components, and then the negative active material layer is subjected to the above measurement.

The "porosity (%)" of the negative active material layer is determined by a calculation formula of (1 - V₂/V₁) × 100, where an apparent volume (volume including voids) of the negative active material layer is defined as V₁, and a sum of actual volumes of materials forming the negative active material layer is defined as V₂. The sum V₂ of actual volumes of the materials forming the negative active material layer can be calculated from the content of each material in the negative active material layer and the true density of each material.

[2] In the negative electrode of a nonaqueous electrolyte energy storage device according to [1], an average particle size of the negative active material particles may be 6 µm or more and 10 µm or less.

According to the negative electrode for a nonaqueous electrolyte energy storage device described in [2], the input of the nonaqueous electrolyte energy storage device can be further increased.

The "average particle size" of the negative active material particles and other particles refers to a value at which a volume-based cumulative distribution is 50%, the volume-based cumulative distribution being calculated in accordance with JIS-Z-8819-2 (2001) based on a particle size distribution obtained by performing measurement on a diluted solution, which is obtained by diluting particles with a solvent, by a laser diffraction/scattering method in accordance with JIS-Z-8825 (2013).

A negative electrode for a nonaqueous electrolyte energy storage device, a nonaqueous electrolyte energy storage device, an energy storage apparatus, and a method for producing a nonaqueous electrolyte energy storage device according to one embodiment of the present invention, and other embodiments will be described in detail. It is to be noted that the name of each structural member (each component) used in each embodiment is in some cases different from the name of each structural member (each component) used in BACKGROUND ART.

### <Negative electrode for nonaqueous electrolyte energy storage device>

A negative electrode, according to one embodiment of the present invention, for a nonaqueous electrolyte energy storage device (hereinafter, also referred to simply as a "negative electrode") includes a negative substrate and a negative active material layer disposed on the negative substrate directly or with an intermediate layer interposed therebetween. The negative electrode is used, for example, as a negative electrode of a nonaqueous electrolyte secondary battery such as a lithium ion secondary battery and other nonaqueous electrolyte energy storage devices. The negative electrode is suitable as a negative electrode of a nonaqueous electrolyte solution energy storage device.

The negative substrate exhibits conductivity. Whether the negative substrate has "conductivity" or not is determined with the volume resistivity of 10⁻² Ω·cm measured in accordance with JIS-H-0505 (1975) as a threshold. As the material for the negative substrate, a metal such as copper, nickel, stainless steel, or nickel-plated steel, or an alloy thereof, a carbonaceous material, or the like is used. Among these metals and alloys, copper or a copper alloy is preferable. Examples of the negative substrate include a foil, a deposited film, a mesh, and a porous material, and a foil is preferable from the viewpoint of costs. Therefore, the negative substrate is preferably a copper foil or a copper alloy foil. Examples of the copper foil include a rolled copper foil and an electrolytic copper foil.

The average thickness of the negative substrate is preferably 2 µm or more and 35 µm or less, more preferably 3 µm or more and 30 µm or less, even more preferably 4 µm or more and 25 µm or less, and particularly preferably 5 µm or more and 20 µm or less. When the average thickness of the negative substrate falls within the above range, it is possible to increase the energy density per volume of the nonaqueous electrolyte energy storage device while increasing the strength of the negative substrate.

The intermediate layer is a layer disposed between the negative substrate and the negative active material layer. The intermediate layer contains a conductive agent such as carbon particles, thereby reducing contact resistance between the negative substrate and the negative active material layer. The composition of the intermediate layer is not particularly limited, and the intermediate layer contains, for example, a binder and a conductive agent.

The negative active material layer contains negative active material particles. The negative active material layer contains optional components such as a conductive agent, a binder, a thickener, and a filler as necessary.

The negative active material particles include natural graphite particles. Examples of natural graphite forming the natural graphite particles include scale-like graphite (flake graphite), massive graphite, and earthy graphite. The natural graphite particles may be graphite particles obtained by spheroidizing and consolidating scale-like graphite. The surfaces of the natural graphite particles may be coated with a carbon material other than the natural graphite particles (for example, non-graphitic carbon) or the like. The application of the carbon material can be performed, for example, by coating the surfaces of the natural graphite particles with pitch and firing the particles.

The negative active material particles may contain negative active material particles other than the natural graphite particles. As the negative active material forming the negative active material particles other than the natural graphite particles, artificial graphite and other various conventionally known negative active materials can be used. Examples of other conventionally known negative active materials include non-graphitic carbon, metal lithium, metals or metalloids such as Si and Sn; metal oxides or metalloid oxides such as a Si oxide, a Ti oxide, and a Sn oxide; titaniumcontaining oxides such as Li₄Ti₅O₁₂, LiTiO₂, and TiNb₂O₇; polyphosphoric acid compounds; and silicon carbide. The "non-graphitic carbon" belonging to other conventionally known negative active materials refers to a carbon material in which the average lattice spacing (d₀₀₂) of the (002) plane determined by an X-ray diffraction method is 0.34 nm or more and 0.42 nm or less before charge-discharge or in a discharged state.

It is preferable that the negative active material particles are mainly the natural graphite particles. For example, in a cross-sectional SEM image of the negative electrode, the ratio of the area occupied by the natural graphite particles to the area occupied by the negative active material particles (the area occupied by the natural graphite particles/the area occupied by the negative active material particles) is preferably 90% or more, and more preferably 99% or more, and may be substantially 100%. The cross-sectional SEM image of the negative electrode is acquired by the same procedure as that for acquiring the SEM image used when determining the "internal void ratio (the ratio of the area of the void in a particle to the area of the whole particle)" in the negative active material particles. The area occupied by the negative active material particles is the area of the entire negative active material particles (the area including voids), and the area occupied by the natural graphite particles is the area of the entire natural graphite particles (the area including voids). The ratio of the area occupied by the natural graphite particles to the area occupied by the negative active material particles (the area occupied by the natural graphite particles/the area occupied by the negative active material particles) is determined using a cross-sectional SEM image in which ten or more negative active material particles are included in one field of view. In addition, the content of the natural graphite particles in all the negative active material particles included in the negative active material layer is preferably 80% by mass or more, more preferably 90% by mass or more, and still more preferably 99% by mass or more, and may be substantially 100% by mass. More specifically, it is particularly preferable to use only the natural graphite particles as the negative active material particles. As described above, by mainly using the natural graphite particles as the negative active material particles, the input is further increased.

The upper limit of the internal void ratio of the negative active material particles is 2%, preferably 1%, and more preferably 0.6%. When the internal void ratio of the negative active material particles is equal to or less than the above upper limit, the input of the nonaqueous electrolyte energy storage device can be increased. The lower limit of the internal void ratio may be 0% or 0.1%. The internal void ratio may be equal to or more than any of the above lower limits and equal to or less than any of the above upper limits. For example, subjecting the spheroidized natural graphite particles to a consolidation treatment allows the internal void ratio of the negative active material particles including the natural graphite particles to be as low as 2% or less. Furthermore, the internal void ratio of the graphite particles (natural graphite particles and artificial graphite particles) included in the negative active material particles is preferably within the above range, and the internal void ratio of the natural graphite particles is also preferably within the above range.

The upper limit of the volume of the pores having pore sizes of 7.8 nm or less in the negative active material particles is 0.0030 cm³/g, preferably 0.0028 cm³/g. When the volume of the pores having pore sizes of 7.8 nm or less in the negative active material particles is equal to or less than the above upper limit, the input of the nonaqueous electrolyte energy storage device can be increased. The lower limit of the volume of such pores may be 0.0001 cm³/g or 0.0010 cm³/g. The volume of such pores may be equal to or more than any of the above lower limits and equal to or less than any of the above upper limits. For example, subjecting the surfaces of the particles to a coating treatment with a carbon material (for example, non-graphitic carbon) or the like allows the volume of the pores having pore sizes of 7.8 nm or less in the negative active material particles including the natural graphite particles to be as low as 0.0030 cm³/g or less. The volume of the pores having pore sizes of 7.8 nm or less shows a tendency to become smaller with the increase of the coating amount in the coating treatment. Furthermore, the volume of the pores having pore sizes of 7.8 nm or less in the graphite particles included in the negative active material particles is preferably within the above range, and the volume of the pores having pore sizes of 7.8 nm or less in the natural graphite particles is also preferably within the above range.

The average particle size of the negative active material particles may be, for example, 1 µm or more and 20 µm or less or 3 µm or more and 15 µm or less, and the average particle size is preferably 6 µm or more and 10 µm or less. In general, the negative active material particles having a larger particle size tend to have larger internal voids. Therefore, when one embodiment of the present invention is applied to the nonaqueous electrolyte energy storage device using the negative active material particles having an average particle size of equal to or more than the above lower limits, the effect of improving the input performance by setting the internal void ratio to 2% or less is remarkable. On the other hand, when the average particle size of the negative active material particles is equal to or less than the above upper limits, the number of contact points between the particles increases, and the resistance of the negative active material layer decreases, whereby the input of the nonaqueous electrolyte energy storage device is further increased. Furthermore, the average particle size of the graphite particles contained in the negative active material particles is preferably within the above range, and the average particle size of the natural graphite particles is also preferably within the above range.

A crusher, a classifier, and the like are used to obtain a powder of the negative active material particles or the like in a predetermined particle size. Examples of a crushing method include a method of using a mortar, a ball mill, a sand mill, a vibratory ball mill, a planetary ball mill, a jet mill, a counter jet mill, a swirling airflow-type jet mill, a sieve, or the like. Wet crushing in which crushing is performed in the presence of water or an organic solvent such as hexane can also be used. As a classification method, a sieve, an air classifier, or the like may be used for both dry and wet classification as necessary.

The content of the negative active material particles in the negative active material layer is preferably 60.0% by mass or more and 99.5% by mass or less, more preferably 90% by mass or more and 99% by mass or less. When the content of the negative active material particles falls within the above range, a balance can be achieved between the increased energy density and producibility of the negative active material layer, and the initial input can be further increased. Furthermore, the content of the graphite particles in the negative active material layer is preferably within the above range, and the content of the natural graphite particles is also preferably within the above range.

The conductive agent is not particularly limited as long as the agent is a material having conductivity. Examples of such a conductive agent include a carbonaceous material, a metal, and conductive ceramics. Examples of the carbonaceous material include non-graphitic carbon and graphene-based carbon. Examples of the non-graphitic carbon belonging to the conductive agent include carbon nanofibers, pitch-based carbon fibers, and carbon black. Examples of the carbon black include furnace black, acetylene black, and ketjen black. Examples of the graphene-based carbon include graphene, carbon nanotubes (CNTs), and a fullerene. However, the conductive agent does not contain natural graphite particles included in the negative active material layer, graphite such as artificial graphite, and non-graphitic carbon belonging to other conventionally known negative active materials described above. Examples of the form of the conductive agent include a powdery form and a fibrous form. As the conductive agent, one of the above materials may be used singly, or two or more thereof may be used in mixture. Alternatively, these materials may be used in the form of a composite. For example, a composite material of carbon black and CNTs may be used. Among these materials, carbon black is preferable from the viewpoints of electron conductivity and coatability, and in particular, acetylene black is preferable.

The content of the conductive agent in the negative active material layer may be 3% by mass or less or 1% by mass or less, and the negative active material layer may not contain the conductive agent.

Examples of the binder include thermoplastic resins such as fluororesins (for example, polytetrafluoroethylene (PTFE) and polyvinylidene fluoride (PVDF)), polyethylene, polypropylene, polyacryl, and polyimide; elastomers such as an ethylene-propylene-diene monomer (EPDM) rubber, sulfonated EPDM, a styrene butadiene rubber (SBR), and a fluororubber; and polysaccharide polymers.

The content of the binder in the negative active material layer is preferably 0.5% by mass or more and 5% by mass or less, more preferably 0.8% by mass or more and 3% by mass or less. When the content of the binder falls within the above range, the negative active material particles or the like can be stably held.

Examples of the thickener include polysaccharide polymers such as carboxymethyl cellulose (CMC) and methyl cellulose. When the thickener includes a functional group that reacts with lithium or the like, the functional group may be deactivated by methylation or the like in advance.

The content of the thickener in the negative active material layer is, for example, preferably 0.1% by mass or more and 6% by mass or less, more preferably 0.5% by mass or more and 3% by mass or less.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide, and aluminosilicate, hydroxides such as magnesium hydroxide, calcium hydroxide, and aluminum hydroxide, carbonates such as calcium carbonate, hardly soluble ionic crystals such as calcium fluoride, barium fluoride, and barium sulfate, nitrides such as aluminum nitride and silicon nitride, and substances derived from mineral resources, such as talc, montmorillonite, boehmite, zeolite, apatite, kaolin, mullite, spinel, olivine, sericite, bentonite, and mica, and artificial products thereof.

The content of the filler in the negative active material layer may be, for example, 0.1% by mass or more and 8% by mass or less, or may be 0.5% by mass or more and 5% by mass or less. The content of the filler in the negative active material layer may be 3% by mass or less or may be 1% by mass or less, and the negative active material layer may not contain the filler.

The negative active material layer may contain a typical nonmetal element such as B, N, P, F, Cl, Br, and I, a typical metal element such as Li, Na, Mg, Al, K, Ca, Zn, Ga, Ge, Sn, Sr, and Ba, or a transition metal element such as Sc, Ti, V, Cr, Mn, Fe, Co, Ni, Cu, Mo, Zr, Ta, Hf, Nb, and W as a component other than the negative active material, the conductive agent, the binder, the thickener, and the filler.

The porosity of the negative active material layer is 35% or more and 60% or less. The lower limit of the porosity may be 40%, 45%, or 50%. When the porosity of the negative active material layer is the above lower limit or more, the input of the nonaqueous electrolyte energy storage device tends to be further increased. Meanwhile, the upper limit of the porosity may be 55%, 50%, 45%, or 40%. When the porosity of the negative active material layer is the above upper limit or less, it is possible to, for example, increase the energy density. The porosity of the negative active material layer may be equal to or more than any of the above lower limits and equal to or less than any of the above upper limits (however, the lower limit is less than the upper limit.). The porosity of the negative active material layer can be adjusted by the size of the negative active material particles, whether or not pressing has been performed during production, the pressure of the pressing, and the like.

### <Nonaqueous electrolyte energy storage device>

A nonaqueous electrolyte energy storage device according to one embodiment of the present invention (hereinafter, also referred to simply as an "energy storage device") includes an electrode assembly including a positive electrode, a negative electrode, and a separator, a nonaqueous electrolyte, and a case that houses the electrode assembly and the nonaqueous electrolyte. The electrode assembly is usually a stacked type in which a plurality of positive electrodes and a plurality of negative electrodes are stacked with a separator interposed therebetween, or a wound type in which a positive electrode and a negative electrode are wound in a state of being stacked with a separator interposed therebetween. The nonaqueous electrolyte is present in a state where the positive electrode, the negative electrode, and the separator are impregnated with the nonaqueous electrolyte. A nonaqueous electrolyte secondary battery (hereinafter also referred to simply as a "secondary battery") will be described as an example of the nonaqueous electrolyte energy storage device.

### (Positive electrode)

The positive electrode includes a positive substrate and a positive active material layer disposed on the positive substrate directly or with an intermediate layer interposed therebetween. The composition of the intermediate layer is not particularly limited, and for example, can be selected from the compositions exemplified for the negative electrode.

The positive substrate exhibits conductivity. As the material of the positive substrate, a metal such as aluminum, titanium, tantalum, or stainless steel, or an alloy thereof is used. Among these materials, aluminum or an aluminum alloy is preferable from the viewpoints of electric potential resistance, the magnitude of conductivity, and costs. Examples of the positive substrate include a foil, a deposited film, a mesh, and a porous material, and a foil is preferable from the viewpoint of costs. Therefore, the positive substrate is preferably an aluminum foil or an aluminum alloy foil. Examples of the aluminum or aluminum alloy include A1085, A3003, and A1N30 specified in JIS-H-4000 (2014) or JIS-H-4160 (2006).

The average thickness of the positive substrate is preferably 3 µm or more and 50 µm or less, more preferably 5 µm or more and 40 µm or less, even more preferably 8 µm or more and 30 µm or less, and particularly preferably 10 µm or more and 25 µm or less. When the average thickness of the positive substrate falls within the above range, it is possible to increase the energy density per volume of the nonaqueous electrolyte energy storage device while increasing the strength of the positive substrate.

The positive active material layer contains a positive active material. The positive active material layer contains optional components such as a conductive agent, a binder (binding agent), a thickener, and a filler as necessary. The optional components such as a conductive agent, a binder, a thickener, and a filler can be selected from the materials exemplified for the negative electrode.

The positive active material can be appropriately selected from known positive active materials. As a positive active material for a lithium ion secondary battery, a material capable of occluding and releasing lithium ions is typically used. Examples of the positive active material include lithium transition metal composite oxides that have an α-NaFeO₂-type crystal structure, lithium transition metal composite oxides that have a spinel-type crystal structure, polyanion compounds, chalcogenides, and sulfur. Examples of the lithium transition metal composite oxides that have an α-NaFeO₂-type crystal structure include Li[LiₓNi₍₁₋ₓ₎]O₂ (0 ≤ x < 0.5), Li[LiₓNi_{γ}Co_{(1-x-γ)}]O₂ (0 ≤ x < 0.5, 0 < y < 1, 0 < 1-x-y), Li[LiₓCo₍₁₋ₓ₎]O₂ (0 ≤ x < 0.5), Li[LiₓNi_{γ}Mn_{(1-x-γ)}]O₂ (0 ≤ x < 0.5, 0 < y < 1, 0 < 1-x-γ), Li[LiₓNi_{γ}Mn_{β}Co_{(1-x-γ-β)}]O₂ (0 ≤ x < 0.5, 0 < γ, 0 < β, 0.5 < γ + β < 1, 0 < 1-x-γ-β), and Li[LiₓNi_{γ}Co_{β}Al_{(1-x-γ-β)}]O₂ (0 ≤ x < 0.5, 0 < _{γ}, 0 < β, 0.5 < γ + β < 1, 0 < 1-x-γ-β). Examples of the lithium transition metal composite oxides that have a spinel-type crystal structure include LiₓMn₂O₄ and LiₓNi_{γ}Mn_{(2-γ)}O₄. Examples of the polyanion compounds include LiFePO₄, LiMnPO₄, LiNiPO₄, LiCoPO₄, Li₃V₂(PO₄)₃, Li₂MnSiO₄, and Li₂CoPO₄F. Examples of the chalcogenides include titanium disulfide, molybdenum disulfide, and molybdenum dioxide. Some of atoms or polyanions in these materials may be substituted with atoms or anion species composed of other elements. These materials may have surfaces coated with other materials. In the positive active material layer, one of the above materials may be used singly, or two or more thereof may be used in mixture.

The positive active material is usually particles (powder). The average particle size of the positive active material is preferably, for example, 0.1 µm or more and 20 µm or less. When the average particle size of the positive active material is equal to or more than the above lower limit, the positive active material is easily produced or handled. When the average particle size of the positive active material is equal to or less than the above upper limit, the electron conductivity of the positive active material layer is improved. In the case of using a composite of the positive active material and another material, the average particle size of the composite is regarded as the average particle size of the positive active material. A crusher, a classifier, or the like is used to obtain a powder with a predetermined particle size. A crushing method and a classification method can be selected from, for example, the methods exemplified for the negative electrode.

The content of the positive active material in the positive active material layer is preferably 50% by mass or more and 99% by mass or less, more preferably 70% by mass or more and 98% by mass or less, and still more preferably 80% by mass or more and 95% by mass or less. When the content of the positive active material falls within the above range, it is possible to achieve a balance between the increased energy density and producibility of the positive active material layer.

The content of the conductive agent in the positive active material layer is preferably 1% by mass or more and 10% by mass or less, more preferably 3% by mass or more and 9% by mass or less. When the content of the conductive agent falls within the above range, the energy density of the nonaqueous electrolyte energy storage device can be increased.

The content of the binder in the positive active material layer is preferably 0.5% by mass or more and 10% by mass or less, more preferably 1% by mass or more and 9% by mass or less. When the content of the binder falls within the above range, the positive active material can be stably held.

The content of the thickener in the positive active material layer may be, for example, 0.1% by mass or more and 6% by mass or less, or may be 0.5% by mass or more and 3% by mass or less. The content of the thickener in the positive active material layer may be 1% by mass or less, and the positive active material layer may not contain the thickener.

The content of the filler in the positive active material layer may be, for example, 0.1% by mass or more and 8% by mass or less, or may be 0.5% by mass or more and 5% by mass or less. The content of the filler in the positive active material layer may be 3% by mass or less or may be 1% by mass or less, and the positive active material layer may not contain the filler.

The positive active material layer may contain typical nonmetal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, and Nb as a component other than the positive active material, the conductive agent, the binder, the thickener, and the filler.

### (Negative electrode)

The negative electrode provided in the nonaqueous electrolyte energy storage device according to one embodiment of the present invention is the negative electrode for the nonaqueous electrolyte energy storage device according to one embodiment of the present invention described above.

### (Separator)

The separator can be appropriately selected from known separators. As the separator, for example, a separator composed of only a substrate layer, a separator in which a heat resistant layer containing heat resistant particles and a binder is formed on one surface or both surfaces of the substrate layer, or the like can be used. Examples of the form of the substrate layer of the separator include a woven fabric, a nonwoven fabric, and a porous resin film. Among these forms, the porous resin film is preferable from the viewpoint of strength, and the nonwoven fabric is preferable from the viewpoint of the liquid retaining property of the nonaqueous electrolyte. As the material for the substrate layer of the separator, for example, a polyolefin such as polyethylene or polypropylene is preferable from the viewpoint of the shutdown function, and polyimide, aramid, or the like is preferable from the viewpoint of resistance to oxidative decomposition. As the substrate layer of the separator, a composite material of these resins may be used.

The heat resistant particles included in the heat resistant layer preferably undergo mass reduction by 5% or less when the temperature is increased from room temperature to 500°C in the air atmosphere of 1 atm, and more preferably undergo mass reduction by 5% or less when the temperature is increased from room temperature to 800°C. Examples of materials of which the mass is reduced by a predetermined percentage or less include inorganic compounds. Examples of the inorganic compounds include oxides such as iron oxide, silicon oxide, aluminum oxide, titanium dioxide, zirconium oxide, calcium oxide, strontium oxide, barium oxide, magnesium oxide, and aluminosilicate; nitrides such as aluminum nitride and silicon nitride; carbonates such as calcium carbonate; sulfates such as barium sulfate; hardly soluble ionic crystals such as calcium fluoride, barium fluoride, and barium titanate; covalently bonded crystals such as silicon and diamond; and substances derived from mineral resources, such as talc, montmorillonite, boehmite, zeolite, apatite, kaolin, mullite, spinel, olivine, sericite, bentonite, and mica, and artificial products thereof. As the inorganic compound, a simple substance or composite of these substances may be used singly, or two or more thereof may be used in mixture. Among these inorganic compounds, silicon oxide, aluminum oxide, or aluminosilicate is preferable from the viewpoint of the safety of the nonaqueous electrolyte energy storage device.

The porosity of the separator is preferably 80% by volume or less from the viewpoint of strength, and is preferably 20% by volume or more from the viewpoint of discharge performance. Here, the term "porosity" is a volume-based value, and refers to a value measured with a mercury porosimeter.

As the separator, a polymer gel composed of a polymer and a nonaqueous electrolyte may be used. Examples of the polymer include polyacrylonitrile, polyethylene oxide, polypropylene oxide, polymethyl methacrylate, polyvinyl acetate, polyvinylpyrrolidone, and polyvinylidene fluoride. The use of the polymer gel has the effect of suppressing liquid leakage. As the separator, the polymer gel may be used in combination with the porous resin film, the nonwoven fabric, or the like described above.

### (Nonaqueous electrolyte)

The nonaqueous electrolyte can be appropriately selected from known nonaqueous electrolytes. For the nonaqueous electrolyte, a nonaqueous electrolyte solution may be used. The nonaqueous electrolyte solution contains a nonaqueous solvent and an electrolyte salt dissolved in the nonaqueous solvent.

The nonaqueous solvent can be appropriately selected from known nonaqueous solvents. Examples of the nonaqueous solvent include cyclic carbonates, chain carbonates, carboxylic acid esters, phosphoric acid esters, sulfonic acid esters, ethers, amides, and nitriles. As the nonaqueous solvent, those in which some of the hydrogen atoms included in these compounds are substituted with halogen may be used.

Examples of the cyclic carbonate include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, and 1,2-diphenylvinylene carbonate. Among these carbonates, EC is preferable.

Examples of the chain carbonates include diethyl carbonate (DEC), dimethyl carbonate (DMC), ethyl methyl carbonate (EMC), diphenyl carbonate, trifluoroethyl methyl carbonate, and bis(trifluoroethyl)carbonate. Among these carbonates, EMC is preferable.

As the nonaqueous solvent, it is preferable to use a cyclic carbonate or a chain carbonate, and it is more preferable to use a cyclic carbonate and a chain carbonate in combination. By using the cyclic carbonate, dissociation of the electrolyte salt can be promoted to improve the ionic conductivity of the nonaqueous electrolyte solution. By using the chain carbonate, viscosity of the nonaqueous electrolyte solution can be kept low. When the cyclic carbonate and the chain carbonate are used in combination, a volume ratio between the cyclic carbonate and the chain carbonate (cyclic carbonate:chain carbonate) is preferably, for example, in a range from 5:95 to 50:50.

The electrolyte salt can be appropriately selected from known electrolyte salts. Examples of the electrolyte salts include lithium salts, sodium salts, potassium salts, magnesium salts, and onium salts. Among these salts, the lithium salts are preferable.

Examples of the lithium salt include inorganic lithium salts such as LiPF₆, LiPO₂F₂, LiBF₄, LiClO₄, and LiN(SO₂F)₂, lithium oxalates such as lithium bis(oxalate)borate (LiBOB), lithium difluorooxalatoborate (LiFOB), and lithium bis(oxalate)difluorophosphate (LiFOP), and lithium salts including a halogenated hydrocarbon group, such as LiSO₃CF₃, LiN(SO₂CF₃)₂, LiN(SO₂C₂F₃)₂, LiN(SO₂CF₃)(SO₂C₄F₉), LiC(SO₂CF₃)₃, and LiC(SO₂C₂F₃)₃. Among these salts, inorganic lithium salts are preferable, and LiPF₆ is more preferable.

The content of the electrolyte salt in the nonaqueous electrolyte solution is, at 20°C and 1 atm, preferably 0.1 mol/dm³ or more and 2.5 mol/dm³ or less, more preferably 0.3 mol/dm³ or more and 2.0 mol/dm³ or less, still more preferably 0.5 mol/dm³ or more and 1.7 mol/dm³ or less, and particularly preferably 0.7 mol/dm³ or more and 1.5 mol/dm³ or less. When the content of the electrolyte salt falls within the above range, the ionic conductivity of the nonaqueous electrolyte solution can be increased.

The nonaqueous electrolyte solution may contain an additive in addition to the nonaqueous solvent and the electrolyte salt. Examples of the additive include aromatic compounds such as biphenyl, alkylbiphenyl, terphenyl, partially hydrogenated terphenyl, cyclohexylbenzene, t-butylbenzene, t-amylbenzene, diphenyl ether, and dibenzofuran; partial halides of the aromatic compounds such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methylvinylene carbonate, ethylvinylene carbonate, succinic anhydride, glutaric anhydride, maleic anhydride, citraconic anhydride, glutaconic anhydride, itaconic anhydride, cyclohexanedicarboxylic anhydride; ethylene sulfite, propylene sulfite, dimethyl sulfite, methyl methanesulfonate, busulfan, methyl toluene sulfonate, dimethyl sulfate, ethylene sulfate, sulfolane, dimethyl sulfone, diethyl sulfone, dimethylsulfoxide, diethyl sulfoxide, tetramethylene sulfoxide, diphenyl sulfide, 4,4'-bis(2,2-dioxo-1,3,2-dioxathiolane), 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tristrimethylsilyl borate, tristrimethylsilyl phosphate, and tetrakistrimethylsilyl titanate. One of these additives may be used singly, or two or more thereof may be used in mixture.

The content of the additive contained in the nonaqueous electrolyte solution is preferably 0.01% by mass or more and 10% by mass or less, more preferably 0.1% by mass or more and 7% by mass or less, still preferably 0.2% by mass or more and 5% by mass or less, and particularly preferably 0.3% by mass or more and 3% by mass or less, with respect to the total mass of the nonaqueous electrolyte solution. When the content of the additive falls within the above range, it is possible to improve capacity retention performance or cycle performance after high-temperature storage, and to further improve safety.

As the nonaqueous electrolyte, a solid electrolyte may be used, or the nonaqueous electrolyte solution and a solid electrolyte may be used in combination.

The solid electrolyte can be selected from any materials that have ionic conductivity and are solid at normal temperature (for example, 15°C to 25°C), such as lithium, sodium, and calcium. Examples of the solid electrolyte include a sulfide solid electrolyte, an oxide solid electrolyte, a nitride solid electrolyte, and a polymer solid electrolyte.

In the case of a lithium ion secondary battery, examples of the sulfide solid electrolyte include Li₂S-P₂S₅, LiI-Li₂S-P₂S₅, and Li₁₀Ge-P₂S₁₂.

The shape of the nonaqueous electrolyte energy storage device according to the present embodiment is not particularly limited, and examples thereof include cylindrical batteries, prismatic batteries, flat batteries, coin batteries and button batteries.

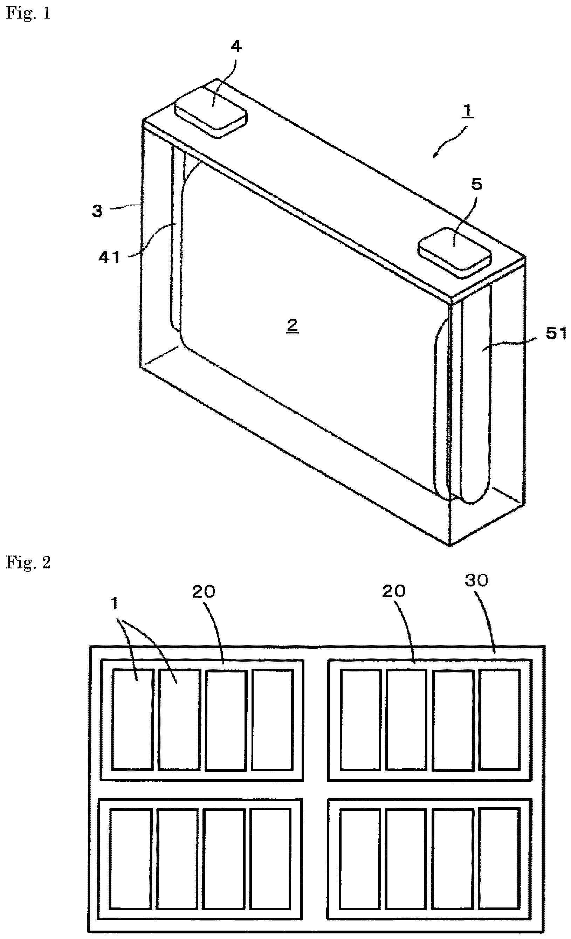

Fig. 1 illustrates a nonaqueous electrolyte energy storage device 1 as an example of a prismatic battery. It is to be noted that Fig. 1 is a view illustrating the inside of a case in a perspective manner. An electrode assembly 2 including a positive electrode and a negative electrode wound with a separator interposed therebetween is housed in a prismatic case 3. The positive electrode is electrically connected to a positive electrode terminal 4 via a positive electrode lead 41. The negative electrode is electrically connected to a negative electrode terminal 5 via a negative electrode lead 51.

### <Energy storage apparatus>

The nonaqueous electrolyte energy storage device according to the present embodiment can be mounted, as an energy storage unit (battery module) configured by assembling a plurality of nonaqueous electrolyte energy storage devices, on a power source for automobiles such as electric vehicles (EVs), hybrid electric vehicles (HEVs), and plug-in hybrid electric vehicles (PHEVs), a power source for electronic devices such as personal computers and communication terminals, a power source for power storage, or the like. In this case, the technique of the present invention may be applied to at least one nonaqueous electrolyte energy storage device included in the energy storage unit.

Fig. 2 illustrates an example of an energy storage apparatus 30 formed by assembling energy storage units 20 in each of which two or more electrically connected nonaqueous electrolyte energy storage devices 1 are assembled. The energy storage apparatus 30 may include a busbar (not illustrated) for electrically connecting two or more nonaqueous electrolyte energy storage devices 1, a busbar (not illustrated) for electrically connecting two or more energy storage units 20, and the like. The energy storage unit 20 or the energy storage apparatus 30 may include a state monitor (not illustrated) that monitors the state of one or more nonaqueous electrolyte energy storage devices.

### <Method for producing nonaqueous electrolyte energy storage device>

A method for producing the nonaqueous electrolyte energy storage device according to the present embodiment can be appropriately selected from known methods. The production method includes, for example, preparing an electrode assembly, preparing a nonaqueous electrolyte, and housing the electrode assembly and the nonaqueous electrolyte in a case. Preparing the electrode assembly includes preparing a positive electrode and a negative electrode and forming an electrode assembly by stacking or winding the positive electrode and the negative electrode with a separator interposed therebetween.

The positive electrode can be prepared, for example, by applying a positive composite paste to a positive substrate directly or via an intermediate layer, and drying the paste. The positive composite paste contains components forming a positive active material layer, such as a positive active material, and a dispersion medium. The applied positive composite paste may be dried and then subjected to pressing or the like.

The negative electrode can be prepared, for example, by applying a negative composite paste to a negative substrate directly or via an intermediate layer, and drying the paste. The negative composite paste contains components forming a negative active material layer, such as natural graphite particles, and a dispersion medium. The applied negative composite paste may be dried and then subjected to pressing or the like. The porosity of the negative active material layer to be formed can be adjusted by whether or not the pressing is performed, the pressure of the pressing, and the like.

Housing the nonaqueous electrolyte in the case can be appropriately selected from known methods. For example, in the case of using a nonaqueous electrolyte solution for the nonaqueous electrolyte, the nonaqueous electrolyte solution may be injected through an inlet formed in the case, and then the inlet may be sealed.

### <Other embodiments>

The nonaqueous electrolyte energy storage device according to the present invention is not limited to the embodiments described above, and various changes may be made without departing from the gist of the present invention. For example, to the configuration of an embodiment, the configuration of another embodiment can be added, or a part of the configuration of an embodiment can be replaced with the configuration of another embodiment or a well-known technique. Furthermore, a part of the configuration of an embodiment can be deleted. In addition, a well-known technique can be added to the configuration of an embodiment.

While a case where the nonaqueous electrolyte energy storage device is used as a nonaqueous electrolyte secondary battery (lithium ion secondary battery) that is chargeable and dischargeable has been described in the embodiment described above, the type, shape, dimensions, capacity, and the like of the nonaqueous electrolyte energy storage device are arbitrary. The present invention can also be applied to various secondary batteries and capacitors such as electric double-layer capacitors and lithium ion capacitors.

While the electrode assembly including the positive electrode and the negative electrode stacked with the separator interposed therebetween has been described in the embodiment described above, the electrode assembly may not include the separator. For example, the positive electrode and the negative electrode may be brought into direct contact with each other, with a non-conductive layer formed on the active material layer of the positive electrode or negative electrode.

### EXAMPLES

Hereinafter, the present invention will be described in more detail with reference to Examples, but the present invention is not limited to the following Examples.

### [Example 1]

### (Preparation of positive electrode)

A positive composite paste was prepared using LiNi_{1/3}Mn_{1/3}Co_{1/3}O₂ as a positive active material, acetylene black (AB) as a conductive agent, a polyvinylidene fluoride (PVDF) as a binder, and N-methylpyrrolidone (NMP) as a dispersion medium. It is to be noted that the mass ratio of the positive active material, AB, and PVDF was set to 93:5:2 (in terms of solid content). The positive composite paste was applied to both surfaces of an aluminum foil serving as a positive substrate so that the mass of the solid content was 6 mg/cm², and dried. Thereafter, roll pressing was performed to obtain a positive electrode in which a positive active material layer was stacked on both surfaces of the positive substrate.

### (Preparation of negative electrode)

As negative active material particles, natural graphite particles (internal void ratio: 0.45%, volume of pores having a pore size of 7.8 nm or less: 0.0028 cm³/g, average particle size: 8 µm) subjected to a consolidation treatment and a coating treatment with a carbon material were prepared.

A negative composite paste was prepared using the negative active material particles, a styrene-butadiene rubber (SBR) as a binder, carboxymethyl cellulose (CMC) as a thickener, and water as a dispersion medium. The mass ratio of the negative active material particles, SBR, and CMC was set to 98.5:1:0.5 (in terms of solid content). The negative composite paste was applied to both surfaces of a copper foil serving as a negative substrate so that the mass of the solid content was 4 mg/cm², and dried. Thereafter, roll pressing was performed to obtain a negative electrode in which a negative active material layer was stacked on both surfaces of the negative substrate. The negative active material layer had a porosity of 35%.

### (Nonaqueous electrolyte)

A nonaqueous electrolyte was obtained by dissolving LiPF₆ at a concentration of 1.0 mol/dm³ in a mixed solvent obtained by mixing ethylene carbonate (EC), dimethyl carbonate (DMC), and ethyl methyl carbonate (EMC) at a volume ratio of 30:35:35.

### (Separator)

A polyolefin microporous membrane was used for a separator.

### (Assembly of nonaqueous electrolyte energy storage device)

A wound electrode assembly was obtained using the positive electrode, the negative electrode, and the separator. The electrode assembly was housed in a case, the nonaqueous electrolyte was injected into the case, and the case was sealed to obtain a nonaqueous electrolyte energy storage device according to Example 1.

### [Examples 2 and 3 and Comparative Examples 1 to 11]

Nonaqueous electrolyte energy storage devices of Examples 2 and 3 and Comparative Examples 1 to 11 were obtained similarly to Example 1 except that the type of the negative active material particles and the porosity of the negative active material layer were as shown in Table 1. The negative active material particles used were all natural graphite particles. The porosity of the negative active material layer was adjusted by changing the pressure during roll pressing.

### (Initial charge-discharge)

The obtained respective nonaqueous electrolyte energy storage devices were subjected to initial charge-discharge under the following conditions. In a thermostatic chamber at 25°C, the nonaqueous electrolyte energy storage devices were subjected to constant current charge at a charge current of 1.0 C and an end-of-charge voltage of 4.10 V, and then to constant voltage charge at 4.10 V. With regard to the charge termination condition, the charge was performed until the total charge time reached three hours. The charge was followed by a pause period of 10 minutes. Constant current discharge was performed at a discharge current of 1.0 C and an end-of-discharge voltage of 3.0 V. The discharge capacity at this time was defined as a rated capacity.

### (Measurement of input)

The respective nonaqueous electrolyte energy storage devices of Examples 1 to 3 and Comparative Examples 1 to 11 were subjected to constant current charge at a current of 1.0 C at 25°C to set the SOC to 50%. Subsequently, the nonaqueous electrolyte energy storage devices were stored in a thermostatic chamber at -10°C for 4 hours, and then charged at a constant current of 5 C, 10 C, 15 C, 20 C, or 25 C for 30 seconds. The "SOC" (State of Charge) refers to a state of charge of a nonaqueous electrolyte energy storage device based on a rated capacity measured in a voltage range in which the nonaqueous electrolyte energy storage device is usually used. After completion of each charge, constant current discharge was performed at a current of 1.0 C to set the SOC to 50%. The relationship between the current in each charge and the voltage 10 seconds after the start of the charge was plotted, and the DC resistance was determined from the slope of a straight line obtained from five plotted points The input 10 seconds after the start of the charge was calculated from the obtained DC resistance. Table 1 shows the input of each nonaqueous electrolyte energy storage device, with the input of the nonaqueous electrolyte energy storage device of Comparative Example 1 as the reference (100%).

**[Table 1]**

| | Negative active material particles | | | | | Negative active material layer | Evaluation |
|---|---|---|---|---|---|---|---|
| | Consolidation | Coating | Internal void ratio /% | Volume of pore having pore size of 7.8 nm or less /cm³/g | Average particle size /µm | Porosity /% | Input (Relative value) /% |
| Comparative Example 1 | Performed | Performed | 0.45 | 0.0028 | 8 | 30 | 100 |
| Example 1 | Performed | Performed | 0.45 | 0.0028 | 8 | 35 | 107 |
| Example 2 | Performed | Performed | 0.45 | 0.0028 | 8 | 44 | 107 |
| Example 3 | Performed | Performed | 0.45 | 0.0028 | 8 | 55 | 108 |
| Comparative Example 2 | Not performed | Performed | 3 | 0.0035 | 9 | 30 | 100 |
| Comparative Example 3 | Not performed | Performed | 3 | 0.0035 | 9 | 35 | 101 |
| Comparative Example 4 | Not performed | Performed | 3 | 0.0035 | 9 | 40 | 102 |
| Comparative Example 5 | Not performed | Performed | 3 | 0.0035 | 9 | 45 | 103 |
| Comparative Example 6 | Not performed | Performed | 3 | 0.0035 | 9 | 50 | 105 |
| Comparative Example 7 | Not performed | Performed | 3 | 0.0035 | 9 | 55 | 105 |
| Comparative Example 8 | Performed | Not performed | 0.50 | 0.0748 | 10 | 30 | 100 |
| Comparative Example 9 | Performed | Not performed | 0.50 | 0.0748 | 10 | 35 | 101 |
| Comparative Example 10 | Performed | Not performed | 0.50 | 0.0748 | 10 | 46 | 105 |
| Comparative Example 11 | Performed | Performed | 0.45 | 0.0033 | 8 | 35 | 104 |

As shown in Table 1, the input (relative value) was 107% or more, which was large, in each of the nonaqueous electrolyte energy storage devices of Examples 1 to 3 that was obtained using the negative active material particles (natural graphite particles) of which an internal void ratio was 2% or less and the volume of pores having a pore size of 7.8 nm or less was 0.0030 cm³/g or less, and has the negative active material layer of which the porosity was in a range of 35% or more and 60% or less. As can be seen from the results of Comparative Examples 2 to 7 and the results of Comparative Examples 8 to 11, in the case of using the negative active material particles of which the internal void ratio was more than 2% or the negative active material particles of which the volume of pores having a pore size of 7.8 nm or less was more than 0.0030 cm³/g, the input tended to be significantly decreased when the porosity of the negative active material layer was decreased. On the other hand, as can be seen from the results of Examples 1 to 3, in the case of using the negative active material particles of which the internal void ratio was 2% or less and the volume of pores having a pore size of 7.8 nm or less was 0.0030 cm³/g or less, the input was hardly decreased even when the porosity of the negative active material layer was low.

### INDUSTRIAL APPLICABILITY

The present invention can be applied to a nonaqueous electrolyte energy storage device and the like used as power sources for electronic devices such as personal computers and communication terminals, automobiles, and the like.

### DESCRIPTION OF REFERENCE SIGNS

1: Nonaqueous electrolyte energy storage device
2: Electrode assembly
3: Case
4: Positive electrode terminal
41: Positive electrode lead
5: Negative electrode terminal
51: Negative electrode lead
20: Energy storage unit
30: Energy storage apparatus

## Claims

1. A negative electrode for a nonaqueous electrolyte energy storage device comprising:
a negative active material layer including negative active material particles,
wherein the negative active material particles include natural graphite particles,
an internal void ratio of the negative active material particles is 2% or less,
a pore volume of pores having a pore size of 7.8 nm or less in the negative active material particles is 0.0030 cm³/g or less, and
a porosity of the negative active material layer is 35% or more and 60% or less.

2. The negative electrode for a nonaqueous electrolyte energy storage device according to claim 1, wherein an average particle size of the negative active material particles is 6 µm or more and 10 µm or less.

3. A nonaqueous electrolyte energy storage device comprising
the negative electrode for a nonaqueous electrolyte energy storage device according to claim 1 or 2.
